# EUROPÄISCHE PATENTSCHRIFT

(11) **EP 1 127 021 B1**
(45) Veröffentlichungstag und Bekanntmachung des Hinweises auf die Patenterteilung: **02.05.2003**
(21) Anmeldenummer: 00954355.4
(22) Anmeldetag: 22.07.2000
(51) Int. Cl.: B65G 15/24, B65G 17/26

(54) **VORRICHTUNG ZUM FEHLSTELLENAUSGLEICH SUKZESSIVE GEFÖRDERTER GEGENSTÄNDE**
DEVICE FOR COMPENSATING DEFECTS IN SUCCESSIVELY CONVEYED OBJECTS
DISPOSITIF POUR COMPENSER LA DEFECTUOSITE D'OBJETS ACHEMINES LES UNS A LA SUITE DES AUTRES

(30) Priorität: 05.08.1999 DE 19937009
(43) Veröffentlichungstag der Anmeldung: 29.08.2001
(73) Patentinhaber: ROBERT BOSCH GMBH, 70442 Stuttgart (DE)
(72) Erfinder: KLINGLER, Dieter, D-74589 Satteldorf (DE); KRAUSS, Ulrich, D-74532 Ilshofen (DE)
(86) Internationale Anmeldenummer: DE0002386
(87) Internationale Veröffentlichungsnummer: WO01010752

(56) Entgegenhaltungen:
- WO-A-98/25840
- DE-A- 2 702 395
- FR-A- 2 355 770

## Beschreibung

Vorrichtungen zum Transport von reihenförmig angeordneten bzw. geförderten Gegenständen, insbesondere Behältnissen, aus einem Behältnistransport in eine Rinne sind bekannt. Über derartige Rinnen wird beispielsweise eine korrekte Verpackung der Gegenstände eingeleitet. In der zu transportierenden Reihe von Behältnissen kann es jedoch zu Fehlstellen kommen, beispielsweise aufgrund zerbrochener Glasbehältnisse, Schlechtausschub usw.. Bei Vorliegen derartiger Fehlstellen in einer Reihe von Gegenständen kann es zu inkorrekt verpackten Gegenständen kommen. Zur Überwachung derartiger Fehlstellen waren bisher aufwendige Sensoreinrichtungen erforderlich. Derartige Sensoreinrichtungen erweisen sich als sehr kostenintensiv.

Die beschriebenen Probleme treten insbesondere bei nicht standfesten Behältnissen auf, deren Umfang Abstufungen aufweist. Bei nicht standfesten, zylindrischen Behältnissen ist es bekannt, die Behältnisse liegend zu transportieren, wobei zu diesem Zwecke beispielsweise Kaskadenpuffer verwendet werden können. Für Fälle, in denen Behältnisse stehend transportiert werden müssen, gibt es Vorrichtungen, in welchen die Behältnisse unmittelbar aneinander anliegend angeordnet werden und sich gegenseitig schieben. Derartige Vorrichtungen erweisen sich insbesondere bei der Verpackung von gefährlichen oder auch teuren Inhalten als unbefriedigend, da es zu einem Zerbrechen der Behältnisse kommen kann und sie bei abgestufter Außenkontur nicht funktionieren.

Herkömmliche Vorrichtungen zur sukzessiven Förderung von Behältnissen sind beispielsweise aus der DE-OS 2209311 und der DE 2518980 bekannt.

Aufgabe der vorliegenden Erfindung ist ein möglichst einfach durchzuführender Fehlstellenausgleich bei sukzessive geförderten nicht standfesten Gegenständen.

Diese Aufgabe wird gelöst durch eine Vorrichtung zum Fehlstellenausgleich sukzessiv geförderter Gegenstände mit den Merkmalen des Patentanspruchs 1.

Mittels der erfindungsgemäßen Vorrichtung ist eine einfache mechanische Lösung zum Ausgleich von Fehlstellen bei sukzessive geförderten Gegenständen zur Verfügung gestellt. Es werden keine elektrischen Komponenten, wie beispielsweise Sensoren oder elektrische Antriebe benötigt. Die geförderten Gegenstände können mittels des einzelne Zellen aufweisenden Zellenriemens in sicherer Weise gefördert werden. Auch relativ kompliziert geformte Gegenstände können mit diesem System befördert werden, indem man die Form der Zellen an die Form der geförderten Gegenstände anpaßt. Eine Teilung bzw. ein Abstand zwischen den geförderten Behältnissen in einer Auslaufrinne kann durch Austausch des Zellenriemens in einfacher Weise an die jeweiligen Bedürfnisse angepaßt werden.

Dadurch, daß der Zellenriemen keinen eigenen Antrieb aufweist, sondern lediglich von Behältnissen weitergeschoben wird, welche aus der vorgelagerten Transporteinrichtung ausgeschoben werden, können die Bereitstellungs- und Wartungskosten gegenüber herkömmlichen Vorrichtungen vermindert werden.

Vorteilhafte Ausgestaltungen der erfindungsgemäßen Vorrichtung sind Gegenstand der Unteransprüche.

Die Transporteinrichtung weist vorzugsweise ein Transport- bzw. Förderband und ein Umlenkrad bzw. eine Transportschnecke auf. Derartige Komponenten sind in einfacher Weise bereitstellbar und erweisen sich in der Praxis als robust und zuverlässig.

Zweckmäßigerweise bildet hierbei eine starre Führung zusammen mit den Zellen eine Transportrinne für die zu fördernden Gegenstände. Hiermit ist ein besonders einfacher und sicherer Transport der geförderten Gegenstände möglich.

Gemäß einer weiteren vorteilhaften Ausgestaltung ist die Form, insbesondere der Durchmesser der Zellen des Zellenriemens und/oder der Abstand zwischen die Zellen bildenden Zellenriemenelementen bezüglich der Form, insbesondere des Durchmessers der zu fördernden Gegenstände einstellbar bzw. anpaßbar. Mit dieser Maßnahme ist es in einfacher Weise möglich, standfeste Behältnisse in sicherer Weise zu transportieren.

Eine bevorzugte Ausführungsform der erfindungsgemäßen Vorrichtung wird nun anhand der beigefügten Zeichnungen im einzelnen beschrieben. In dieser zeigt
Figur 1 eine schematische Draufsicht auf eine bevorzugte Ausführungsform der erfindungsgemäßen Vorrichtung zum Fehlstellenausgleich sukzessive geförderter Gegenstände,
Figur 2 eine Ansicht des erfindungsgemäß verwendeten Zellenriemens entlang der Schnittlinie A-A der Figur 1, und
Figur 3 einen Schnitt entlang der Linie B-B in Figur 1.

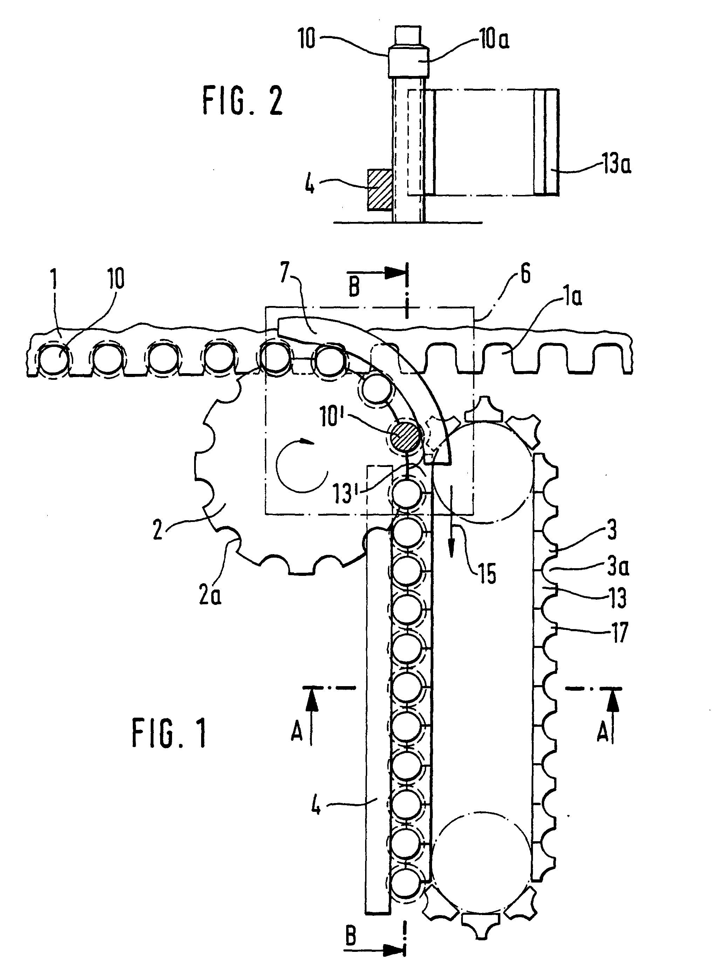

Die in Figur 1 dargestellte Vorrichtung zum Fehlstellenausgleich weist ein Transportband 1 auf, mittels dessen zu fördernde Behältnisse 10 unter Zwischenschaltung eines Umlenkrades 2 einem Zellenriemen 3 zugeführt werden. Transportband 1 und Umlenkrad 2 bilden gemeinsam eine erste Transporteinrichtung. Das Transportband 1 und/oder das Umlenkrad 2 sind hierbei mittels eines nicht gezeigten Antriebes antreibbar. Das Umlenkrad 2 wirkt mit einer Führungsschiene 7 derart zusammen, daß die transportierten Behältnisse 10 von dem Transportband 1 entfernt und, bei teilweiser Aufnahme in Aufnahmen 2a des Umlenkrades 2, auf den Zellenriemen 3 übertragen werden. Der obere Bereich des Zellenriemens 3, das Umlenkrad 2, der entsprechende Bereich des Transportbandes 1 und die Führungsschiene 7 bilden zusammen eine Übertragungsstation 6 für die Behältnisse 10.

Der Zellenriemen 3 trägt einzelne Zellenriemenelemente 13, welche derart ausgelegt sind, daß sich entlang der Haupterstreckungsrichtung des Zellenriemens 3 jeweils Zellen 3a bilden. Diese Zellen 3a sind, wie auch die Aufnahmen 2a des Umlenkrades 2, bezüglich des Durchmessers der zu transportierenden Behältnisse 10 angepaßt, wie weiter unten noch beschrieben wird.

Zur weiteren Erläuterung der erfindungsgemäßen Vorrichtung ist ein bestimmtes Behältnis, welches kurz vor seiner Übertragung auf den Zellenriemen 3 steht, mit 10' bezeichnet und schraffiert dargestellt. Der Zellenriemen 3 ist ohne eigenen Antrieb ausgebildet. Lediglich durch Zusammenwirken mit einer mit einem Behältnis (hier 10') beaufschlagten Aufnahme 2a des Umlenkrades 2 kommt es zu einer Verschiebung des Zellenriemens 3 um einen Zellenabstand bzw. eine Teilung des Zellenriemens 3. Man erkennt in der Figur 1, daß das Umlenkrad 2 und die Führung 7 derart positioniert sind, daß ein in einer Aufnahme 2a des Umlenkrades 2 angeordnetes Behältnis 10 ein hier mit 13' bezeichnetes Zellenriemenelement und damit den gesamten Zellenriemen 3 verschieben wird, wie mittels des Pfeiles 15 angedeutet ist. Mittels der gefüllten Aufnahme 2a kommt es also zu einer Wirkverbindung bzw. Wechselwirkung zwischen dem Umlenkrad 2 und dem Zellenriemen 3.

Im Falle einer Fehlstelle auf dem Transportband 1, d.h. einer unbestückten Aufnahme 1a, kommt es entsprechend zu einer leeren Aufnahme 2a auf dem Umlenkrad 2. In diesem Fall kommt es, wenn eine derartige leere Aufnahme 2a an dem Zellenriemen 3 vorbeistreift, nicht zu der oben beschriebenen Wechselwirkung, so daß der Zellenriemen in seiner momentanen Position verbleibt. Erst bei einer weiteren mit einem Gegenstand bestückten Aufnahme 2a kommt es zu einer weiteren Bewegung des Zellenriemens 3. Durch diesen Mechanismus kann in einfacher Weise gewährleistet werden, daß Fehlstellen, welche auf der Transporteinrichtung auftreten, auf dem Zellenriemen ausgeglichen bzw. verhindert sind.

Eine starre Führung 4 bildet zusammen mit den Zellen 3a einen Transportkanal für die mittels des Zellenriemens 3 transportierten Behältnisse 10.

In Fig. 2 erkennt man, daß mittels der erfindungsgemäßen Vorrichtung auch Behältnisse mit Durchmesserabstufungen, wie beispielsweise Zylinderampullen mit einer Kappe (hier mit 10a bezeichnet) in einfacher Weise transportierbar sind. Der Abstand zwischen der starren Führung 4 und den Zellenriemenelementen 13 ist hierbei so zu wählen, daß eine sichere Führung der Behältnisse möglich ist. Ferner kann die Form der die Zellen 3a bildenden Zellenriemenelemente im Hinblick auf die Form der zu fördernden Gegenstände 10 angepaßt werden.

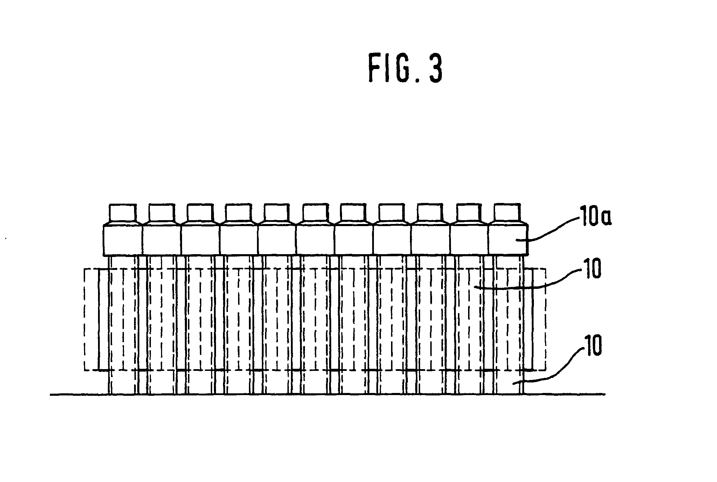

Die Zellenriemenelemente können derartige Beabstandungen aufweisen, daß der Abstand der einzelnen Behältnisse 10 auf ein gewünschtes Mindestmaß bringbar ist, beispielsweise der größten Durchmesser der Behältnisse 10, wie in Figur 3 deutlich wird. Man erkennt hier, daß die einzelnen Behältnisse 10 mit ihren Kappen 10a im wesentlichen aneinanderliegen. Beispielsweise mittels der mit 17 bezeichneten Stege der Zellenriemenelemente 13 ist ein gewünschter Abstand zwischen den Behältnissen 10 einstellbar.

Mittels der erfindungsgemäßen Vorrichtung können nicht standfeste Behältnisse in einer Reihe bzw. Folge verschoben werden, auch wenn sie am Umfang Durchmesserabstufungen aufweisen.

## Patentansprüche

1. Vorrichtung zum Fehlstellenausgleich sukzessive geförderter Gegenstände (10) mit einer ersten angetriebenen Transporteinrichtung (1, 2), mittels der die Gegenstände (10) in jeweiligen Aufnahmen(2a) sukzessive in eine Übergabestation (6) zur Übertragung der Gegenstände (10) auf eine zweite Transporteinrichtung (3) bringbar sind, wobei
die zweite Transporteinrichtung (3) als Zellen (3a) zur Aufnahme der Gegenstände (10) aufweisender Zellenriemen (3) ausgebildet ist, und die erste (1,2) und die zweite (3) Transporteinrichtung derart miteinander in Wirkverbindung stehen, daß ein in einer Aufnahme (2a) der ersten Transporteinrichtung (1,2) angeordneter Gegenstand (10) bei seiner Übertragung auf die zweite Transporteinrichtung (3) eine Verschiebung der zweiten Transporteinrichtung (3) bewirkt, so daß eine nachfolgende Zelle (3a) der zweiten Transporteinrichtung (3) zur Aufnahme eines nachfolgenden Gegenstandes (10) in die Übergabestation (6) eintritt, wobei es bei unbestückter Aufnahme (2a) zu keiner derartigen Wechselwirkung zwischen erster (1,2) und zweiter (3) Transporteinrichtung kommt und kein Weitertransport der zweiten Transporteinrichtung (3) erfolgt.

2. Vorrichtung nach Anspruch 1, **dadurch gekennzeichnet, daß** die erste Transporteinrichtung (1,2) ein Förderband (1) und ein Umlenkrad (2) aufweist.

3. Vorrichtung nach Anspruch 1, **dadurch gekennzeichnet, daß** die Zellen (3a) des Zellenriemens (3) zusammen mit einer starren Führung (4) eine Transportrinne für die zu fördernden Gegenstände (10) bilden.

4. Vorrichtung nach einem der vorstehenden Ansprüche, **dadurch gekennzeichnet, daß** die Form, insbesondere der Durchmesser der Zellen (3a) des Zellenriemens (3) und/oder der Abstand zwischen die Zellen (3a) bildenden Zellenriemenelementen (13) bezüglich der Form, insbesondere des Durchmessers der zu fördernden Gegenstände (10) einstellbar bzw. anpaßbar ist.

## Claims

1. Apparatus for compensating for defects of successively conveyed objects (10), having a first driven transporting arrangement (1, 2), by means of which the objects (10), in respective mounts (2a), can be moved successively into a transfer station (6) for transferring the objects (10) to a second transporting arrangement (3), it being the case that the second transporting arrangement (3) is designed as a pocket belt (3) having pockets (3a) for accommodating the objects (10), and the first (1, 2) and the second (3) transporting arrangements are in operative connection with one another such that an object (10) arranged in a mount (2a) of the first transporting arrangement (1, 2), as it is transferred to the second transporting arrangement (3), causes the second transporting arrangement (3) to be displaced, with the result that a following pocket (3a) of the second transporting arrangement (3) passes into the transfer station (6) in order to accommodate a following object (10), it being the case that when a mount (2a) is not filled no such interaction takes place between the first (1, 2) and second (3) transporting arrangements and the second transporting arrangement (3) is not transported further.

2. Apparatus according to Claim 1, **characterized in that** the first transporting arrangement (1, 2) has a conveying belt (1) and a deflecting wheel (2).

3. Apparatus according to Claim 1, **characterized in that** the pockets (3a) of the pocket belt (3), together with a rigid guide (4), form a transporting channel for the objects (10) which are to be conveyed.

4. Apparatus according to one of the preceding claims, **characterized in that** the shape, in particular the diameter, of the pockets (3a) of the pocket belt (3) and/or the spacing between the pocket-belt elements (13) which form the pockets (3a) can be adjusted and/or adapted with respect to the shape, in particular the diameter, of the objects (10) which are to be conveyed.

## Revendications

1. Dispositif pour compenser des points défectueux d'objets (10) transportés successivement à l'aide d'une première installation de transport, motrice (1, 2) à l'aide de laquelle les objets (10) sont mis dans des logements (2a) respectifs, successifs dans un poste de transfert (6) pour transférer les objets (10) dans une seconde installation de transport (3), dispositif dans lequel
la seconde installation de transport (3) est formée d'une courroie à alvéoles (3) ayant des alvéoles (3a) pour recevoir les objets (10), et
la première (1, 2) et la seconde (3) installation de transport coopèrent de façon qu'un objet (10) prévu dans un logement (2a) de la première installation de transport (1, 2) produise lors de sa transmission vers la seconde installation de transport (3), un déplacement de la seconde installation de transport (3) pour qu'une cellule suivante (3a) de la seconde installation de transport (3) arrive dans le poste de transfert (6) pour recevoir un objet suivant (10), et
en cas de logement (2a) inoccupé, il n'y aura pas une telle coopération entre la première (1, 2) et la seconde (3) installation de transport ni poursuite du mouvement de la seconde installation de transport (3).

2. Dispositif selon la revendication 1,
**caractérisé en ce que**
la première installation de transport (1, 2) comporte une bande transporteuse (1) et une roue de renvoi (2).

3. Dispositif selon la revendication 1,
**caractérisé en ce que**
les alvéoles (3a) de la courroie à alvéoles (3) forment avec un moyen de guidage rigide (4), une goulotte de transport pour les objets (10) à transporter.

4. Dispositif selon l'une quelconque des revendications précédentes,
**caractérisé en ce que**
la forme en particulier et le diamètre des alvéoles (3a) de la courroie à alvéoles (3) et/ou la distance entre les alvéoles (3a) des éléments de courroie (13) formant les alvéoles, est réglée ou adaptée à la forme et en particulier au diamètre des objets (10) à transporter.
